# EUROPEAN PATENT APPLICATION

(11) **EP 1 206 953 A2**
(43) Date of publication of application: **22.05.2002**
(21) Application number: 01309605.2
(22) Date of filing: 14.11.2001
(51) Int. Cl.: A63F 13/10

(54) **Information branching control method**

(30) Priority: 15.11.2000 JP 2000348658; 02.07.2001 JP 2001201003
(71) Applicant: Sony Computer Entertainment Inc., Tokyo 107-0052 (JP)
(72) Inventor: Miyaki, Kazuhito, c/o Sony Computer Entertainment, Minato-ku, Tokyo 107-0052 (JP); Fujisaku, Junichi, c/o Production I.G. Inc., Kokubunji-shi, Tokyo 185-0021 (JP)
(74) Representative: Turner, James Arthur

(57) **Abstract**

A digest summarizing a content of an antecedent part has selective branches disposed therein, and a branch destination for starting a present part as a subsequent part of the antecedent part is determined in accordance with select information of the selective branches in the digest. Therefore, the present invention is applicable to a video game divided for example into an antecedent and a subsequent part, achieving a high gameness (high entertainmentability) rich of variation.

## Description

The present invention relates to an information branching control method, a program executing apparatus, a record medium with an information branching control program recorded therein to be executed by a computer, an information branching control program to be executed by a computer, to be preferable for a game system such as a story branching video game divided into a plurality of parts.

In recent years, in which entertainment apparatuses such as video game machines have been spread, the player is allowed to enjoy a variety of games by having an entertainment apparatus execute a game application program obtained via a record medium such as a CD-ROM or DVD-ROM or a communication medium such as a communication line or network. In a game application program such as an RPG (roll playing game), an AVG (adventure game), or an SLG (simulation game), a story is advanced in accordance with a player's instruction received via a controller connected to an entertainment apparatus, whereas the game application program is adapted to respond to the content of the player's instruction by changing the content of the story to be developed thereafter. Therefore, in a story branching game of this kind, the player can enjoy a variety of developments of story in accordance with the content of one's own instruction.

Typically, a story branching game of such a kind is adapted for a television monitor apparatus to display on a monitor screen thereof a game image frame indicating a picture (a preformed game picture) representing a developed story in accordance with the content of a player's instruction, a select image frame (such as of selective actions or lines) for a development of story to be selected by a player via a controller, and such a title image frame as for a narration to be indicated of a picture in the game picture frame, as necessary. In the case of such a game as having a nature of an action game, for example, in a game application program, besides the selective development of a story, there is displayed an instruction image frame such as of arrow marks and buttons operative by a player. If operations are performed by the player as indicated from the game application program, as the operations are successful, the game application program makes the story advance. On the other hand, to the contrary, if the player has failed in operation, the game application program counts the mistake. Further, the game application program is adapted, for example, to make the game over with a count of mistakes having reached a predetermined number, or to come to an end immediately after the failure.

In such a story branching game as described, if a continued story is divided to be provided in a plurality of discs, for example, into first and second parts (first and second volumes), there occurs a problem as to how the development of story in a game of the second part (second volume) can be influenced by the branching of story selected in a game of the first part (first volume).

In a conventional video game, information (hereinafter called "saved data") such as an intermediate result of a game is stored, for example in a memory card inserted in a game machine, and when starting a subsequent game, the saved data is read to reflect the information such as an intermediate result of the previous game.

It therefore is considered that, also in the case of such a story branching game as divided into first and second parts, by the same method as using a saved data, that is, by storing information, such as a branching of story selected in a game of the first part, as a saved data in a memory card and making use of the saved data in a game of the second part, an influence of the branching of story selected in the game of the first part can be reflected on a development of story in a game of the second part. Such a method as using a saved data in a described manner, however, is inapplicable to those cases in which a game simply of the second part is started by a user having not experienced any game of the first part.

On the other hand, there is a story branching game divided into first and second parts, which is devised to allow a game to start from an initial condition even with the second part only. In this case, however, unlike the above-noted case which employs a saved data of a first part, any user has to start a game of the second part from the same initial condition, so that the game is scanty of variations, as a problem. In this game, the development of story in the second part cannot reflect any branching of story in the first part, as another problem.

Various respective aspects and features of the invention are defined in the appended claims. Features from the dependent claims may be combined with features of the independent claims as appropriate and not merely as explicitly set out in the claims.

The present invention has been made with such points in view. Embodiments of the present invention can provide an information branching control method, a program executing apparatus, a record medium with an information branching control program recorded therein to be executed by a computer, an information branching control program to be executed by a computer, whereby, in a story branching game in which for example a continued story is divided to be provided in a plurality of parts such as an antecedent and a subsequent part, an influence of a story branching selected in a game of the antecedent part can reflect on a story development of the subsequent part and, in addition, even in a case of a game starting simply with the subsequent part, an influence similar to that of the story branching selected in the game of the antecedent part can be reflected on a story development of the subsequent part, allowing a high gameness (high entertainmentability) rich of variation to be achieved.

According to the present invention, a digest summarizing a content of an antecedent part has selective branches disposed therein, and a branch destination for starting a present part as a subsequent part. of the antecedent part is determined in accordance with select information of the selective branches in the digest.

In other words, according to the present invention, for starting the present part, there can be a variety of branch destinations corresponding to selections of the selective branches in the digest. Therefore, the present invention is applicable to a video game divided for example into an antecedent and a subsequent part, achieving a high gameness (high entertainmentability) rich of variation.

The invention will now be described by way of example with reference to the accompanying drawings, throughout which like parts are referred to by like references, and in which:
Fig. 1 is an illustration showing schematic arrangement of an essential portion of an entertainment system according to an embodiment of the present invention.
Fig. 2 is a schematic block diagram showing internal arrangement of an entertainment apparatus of the embodiment.
Fig. 3 is a diagram for explanation of a data format of a subsequent part of a game application program of the embodiment.
Fig. 4 is a flowchart showing the flow of a starting. of a digest mode and a digest mode process in the game application program of the embodiment.
Fig. 5 is an illustration for explanation of a main menu.
Fig. 6 is an illustration for explanation of a pause menu.
Fig. 7 is a diagram showing the flow of a concrete example of digest story of a video game of the embodiment, for explanation from a start of a scene no. PRE_001 to scene nos. PRE_004, 005, 007.
Fig. 8 is an illustration showing an example of a selection image frame in execution of the digest story of the video game of the embodiment.
Fig. 9 is a diagram showing the flow of the concrete example of digest story of the video game of the embodiment, for explanation from scene nos. PRE_004, 005, 006 to scene nos. PRE_010, 012.
Fig, 10 is a diagram showing the flow of the concrete example of digest story of the video game of the embodiment, for explanation from a scene no. PRE_013 to scene nos. PRE_015, 016.
Fig. 11 is a diagram showing the flow of the concrete example of digest story of the video game of the embodiment, for explanation of a progress from a scene no. PRE_017 to stories of a present part.

### Entire arrangement of the entertainment system according to the invention

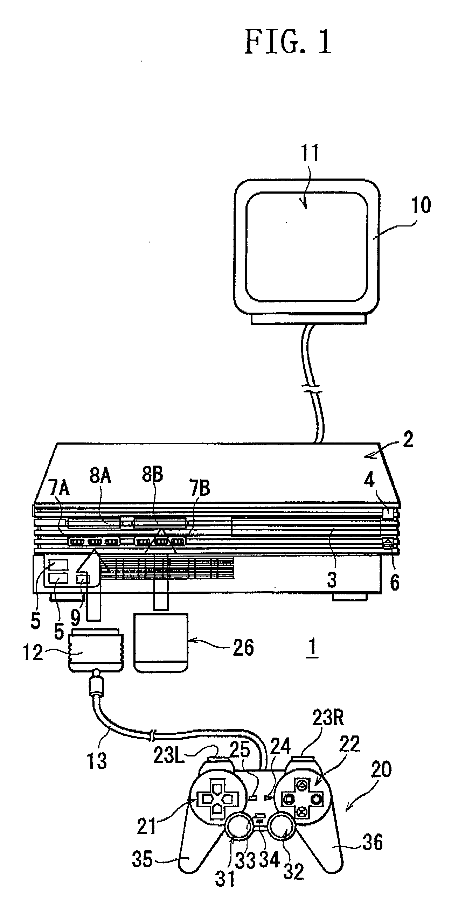

Fig. 1 shows a schematic arrangement of an entertainment system as an embodiment (for example, a video game) of the invention.

An entertainment system 1 shown in Fig. 1 is a video game system formed by an entertainment apparatus 2 as an example of a program executing apparatus according to the invention, a controller 20 as an operation terminal to be operated by the user (or player), and a television monitor apparatus 10 which visualizes the content of a game and outputs sounds in the game.

### Brief on the entertainment apparatus

The entertainment apparatus 2 has memory card slots 8A, 8B for a memory card 26 to be attachable thereto and detachable therefrom, controller ports 7A, 7B for a connector 12 of a cable 13 of the controller 20 to be attachable thereto and detachable therefrom, a disc tray 3 for application of an optical disc, such as a DVD-ROM or CD-ROM, an open button 6 for opening the disc tray 3, an on/standby/reset button 4 for rendering a power supply on, in standby, or reset, an IEEE (Institute of Electrical and Electronics Engineers) 1394 connection terminal 6, USB (Universal Serial Bus) connection terminals 5, etc. Though not depicted, the entertainment apparatus 2 has at the back side, a power supply switch, an audio video output terminal (Av multiple output terminal), a PC card slot, an optical digital output terminal, an AC power supply input terminal, etc.

The entertainment apparatus 2 is adapted to execute a game in accordance with instructions from the player via the controller 20, and a game application program read from the optical disc, such as a CD-ROM or DVD-ROM, a semiconductor memory or the like, or the game application program down-loaded via a variety of communication lines, such as a telephone line, LAN, CATV line, and communication satellite line. It is noted that the execution of a game means advancing the game by controlling, mainly in response to instructions from the player via the controller 20, a picture (game picture) in a game image frame displayed on a screen 11 of the television monitor 10, as well as sounds (game sounds) of an audio apparatus, connected to the entertainment apparatus 2. In the case of entertainment apparatus 2 shown in Fig. 1, the controller ports 7A, 7B allow connection of two controllers 20 so that, by use of the two controllers, two players can perform a variety of games. The memory card 26 to be attached to the memory card slots 8A, 8B allows storage (or saving) of various game data arising from execution of a video game, for example.

The entertainment apparatus 2 is adapted, not simply for execution of a video game in accordance with the game application program, but also for reproduction (decoding) of video and audio data recorded in a DVD or audio data recorded in a CD, for example, as well as for actions to be made in accordance with other various application programs.

### Brief on the controller

The controller 20 has a left grip part 35 to be gripped, as it is involved, by the palm of the left hand of an operator (player) of the controller 20, a right grip part 36 to be gripped, as it is involved, by the palm of the right hand, a left operation part 21 and a right operation part 22 to be operated by the thumbs of the left and right hands, as the grip parts 35, 36 are gripped by the left and right hands of the player, a left analog operation part 31 and a right analog operation part 32 adapted for analog operations (joystick operations) by the same left and right thumbs, a left first pushdown button 23L and a right first pushdown button 23R to be pressed down for operations by the left and right first fingers, respectively, and a left second pushdown button and a right second pushdown button (both not shown) provided under the left and right first pushdown buttons 23L, 23R, respectively, to be pressed down for operations by the left and right second fingers, respectively. The left operation part 21 is provided with "up", "down", "left", and "right" orientation keys to be used when the player performs operations such as for movements, such as in "up", "down", "left", and "right" directions on an image frame, of game characters, for example, and on the other hand, the right operation part 22 is provided with four indication buttons ("Δ", "□", "×", and "○" buttons) which have different functions respectively allotted by the game application program, such as setup and execution of functions of game characters, for example.

Further, the controller 20 has a mode select switch 33 for performing selection of operation modes to start or stop functions of the left and right operation parts 21, 22 and the left and right analog operation parts 31, 32, a lighting display part 34 for causing the player to recognize a selected operation mode by a lighting display such as of an LED (light emitting diode), a start button 24 for indicating reproduction or temporal stop, a select button 25 for performing an indication or the like to have a menu or operation panel displayed on the monitor screen 11, etc.

When such various buttons and operation parts are operated, the controller 20 is adapted to generate operation signals corresponding to their operations, and transmit them to the entertainment apparatus 2 via the cable 13.

Still further, the controller 20 has, in each of the left and right grip parts 35, 36, a vibration generating mechanism in which, for example, a weight eccentrically offset relative to a rotation axis of a motor is rotated by the motor to thereby generate vibrations, and which is operative in response to an indication from the entertainment apparatus 2. It thus has also a function of transmitting vibrations to the hands of the player by operation of the vibration generating mechanism.

### Internal arrangement of the entertainment apparatus

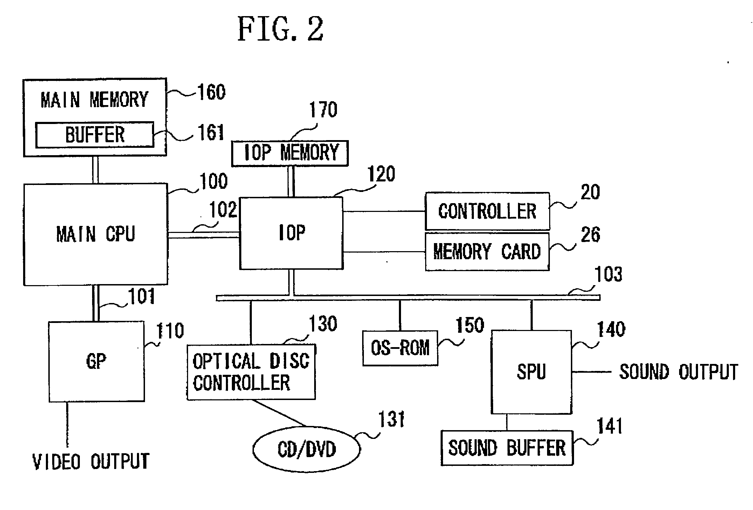

Description is now made of schematic arrangement of internal circuitry of the entertainment apparatus 2 of the embodiment, with reference to Fig. 2.

The entertainment apparatus 2 of the embodiment has as basic arrangement a main CPU 100 for performing control of elements of the internal arrangement as well as processing signals in accordance with various programs such as a later-described game application program of the embodiment, a graphic processor (GP) 110 for performing a graphic processing, an IO processor (IOP) 120 for performing an interfacing process between external and internal of the apparatus, an optical disc controller 130 for controlling reading of the optical disc, such as DVD or CD, in which application programs and multi-medium data are recorded and for decoding the read data, a main memory 160 including a work area of the main CPU 100 and a buffer 161 for temporary storage of read data from the optical disc 131, an IOP memory 170 for holding commands and data to be executed by the IO processor 120, an OS-ROM 150 for storing an operating system program to be executed mainly by the main CPU 100 and the IO processor 120, and a sound processor unit (SPU) 140 for performing a sound signal processing.

The main CPU 100 and the graphic processor 110 are interconnected by a dedicated bus 101, and the main CPU 100 and the IO processor 120 are interconnected by an SBUS 102. The IO processor 120 and the optical disc controller 130, OS-ROM 150, and sound processor unit 140 are interconnected by an SSBUS 103.

The main CPU 100 controls whole actions of the entertainment apparatus by execution such as of various programs, including the game application program of the embodiment, which are read from the optical disc 130 and loaded in the main memory 160 or down-loaded via communication networks. The IO processor 120 performs controlling input and output such as of data from the memory card 26 for storage such as of game settings and of signals from the controller 20 where the player's instructions are input, and input and output of data such as at the unshown USB connection terminal, IEEE 1394 connection terminal, and PC card slots, as well as data protocol conversion, etc.

The graphic processor 110 responds to a frame drawing instruction from the main CPU 100 by drawing an image frame, and stores a drawn image frame in a frame buffer (not shown). The graphic processor 110 has a function of a geometry transfer engine for performing processes such as a coordinate transformation. The geometry transfer engine is adapted to form an imaginary three-dimensional object by a set of triangular polygons, when an application program such as for a game recorded in the optical disc 131 for example makes use of a so-called three-dimensional graphic, and performs various calculations for generating an image frame to be obtained by photographing the three-dimensional object by an imaginary camera, that is, such as a perspective transformation in the rendering (a calculation of coordinate values in the case vertices of respective polygons constituting the three-dimensional object are projected on an imaginary camera screen). The graphic processor 110 follows a frame drawing instruction from the main CPU 100 to perform, making use of the geometry transfer engine, as necessary, the rendering of a three-dimensional object relative the frame buffer, thereby preparing an image frame. Then, it outputs a video signal representing the image frame.

The sound processor unit 140 has, for example, such functions as an ADPCM decoding function of reproducing an adaptive prediction coded audio data, a reproducing function of reproducing waveform data stored in a sound buffer 141 to thereby reproduce and output audio signals such as an effect sound, and a modulating function of modulating, to reproduce, waveform data stored in the sound buffer 141. By provision of such functions, the sound processor 140 is configured to be used as a so-called sampling sound source for generating an audio signal, such as an instrument sound or effect sound, from waveform data stored in the sound buffer 141.

In the entertainment apparatus 2 configured as described, for example when the power supply is thrown in, there are read an operating system program for main CPU and an operating system program for IO processor respectively from an OS-ROM 150, which operating system programs are then executed at the main CPU 100 and the IO processor 120. The main CPU 100 is thereby adapted to execute general control of respective parts of the entertainment apparatus 2. Further, the IO processor 120 is adapted to control inputs and outputs of signals, such as to and from the controller 20 and memory card 26. The main CPU 100 in execution of the operating system program, past an initialization process such as action checks, controls the optical disc controller 130 to read an application program, such as of a game, recorded in the optical disc 131. Then, the main CPU 100, having loaded in the main memory 160, executes the game application program. By execution of this game application program, the main CPU 100 is adapted to control the graphic processor unit 110 as well as the sound processor unit 140 in response to the player's instruction received from the controller 20 via the IO processor 120, thereby controlling display of image frames as well as generation of effect sounds and instrumental sounds.

### Video game according to the embodiment

### Brief on the game

There will be described a brief on a video game the entertainment apparatus 2 is to perform on basis of a game application program according to the present embodiment.

The video game according to the present embodiment is a game in which a story is branched to provide various flows of story to be enjoyed, and in particular, a continued story is divided into a plurality of parts to be provided. It is noted that the present embodiment of video game is applicable not simply in the case in which a continued story is divided to be provided in a plurality of recording media, but also in cases in which a plurality of divided parts are distributed for example via a network. In the case of distribution using a network, there is taken an method such as by shifting distribution times of divided story parts. In the present embodiment, description is made of an example in which a continued story is divided to be provided in two parts, for example, an antecedent and a subsequent.

The present embodiment of video game is a game in which, at both antecedent and subsequent story parts, a story branch selection in accordance with a player's instruction input or an automatic story branch selection is made to thereby have a varied development of story. It is noted that the selection of a story branch is executed, in some cases in which a selection image frame is displayed on a monitor screen, as the player's selection on the selection image frame, and in some other cases in which the selection image frame is not displayed, by the player's own detection of (search for) a story branching point. In the latter case in which a search for a story branching point is made to thereby change the development of story without displaying a selection image frame, as it is compared with a selection of story branch from a displayed selection image frame only, it is difficult for the player to predict a subsequent story development, whereby an unexpectable game can be implemented, without accompanying such a hindrance to the flow of story that the display of a selection image frame might have constituted.

In the present embodiment of video game, there is programmed an increment or decrement of game point as well as a setting of a branching flag, such as in dependence on the story branch selection by the player's instruction or the automatic story branch selection, so that the development of a subsequent story is influenced by the number of game points or by a value set to the branching flag. That is, in the present embodiment of video game, a tendency of subsequent story development (in terms such as of a tendency to be increased for the development to go toward a good conclusion or to go toward a bad conclusion) and a story branch destination is determined in accordance with the number of game points and the set value of the branching flag, respectively. In the present embodiment of video game, an increased number of game points provides an increased tendency for the development of story to go toward a bad conclusion, and on the contrary, a decreased number of game points provides an increased tendency for the development of story to go toward a good conclusion. It is noted that, in the present embodiment of video game in which the tendency for the development of story to go toward a bad conclusion increases as the number of game points increases, this number of game points will hereafter be called "bad point", when necessary.

The present embodiment of video game stores in the memory card 26 a saved data containing a game point such as by a story branching and a branching flag, so that this saved data can reflect on a subsequent game, or the saved data of an antecedent part can reflect on a game of a subsequent part (the development of story) . In particular, in the present embodiment of video game, among saved data arising from a video game of the antecedent part, the game point and the branching flag are based on to have influences on a story development at a start of a game of the subsequent part. That is, in the present embodiment of video game, a story development at an end of a game of the antecedent part is succeeded to the story development at the start of the game of the subsequent part, so that the games can be done with a relevance, without a sense of incompatibility, between the antecedent and subsequent parts.

Further, for such a case that a player who for example has not experienced any game on an antecedent part starts a game on a subsequent part only, the present embodiment of video game is programmed to start a digest mode for reproducing a digest of story of the antecedent part, when the game on the subsequent part starts, while also the digested story being reproduced has story branches selective by the player. That is, in comparison with a conventional story branching game in which, when starting a game simply on a subsequent part, there is started a new game from an initial condition preset at the end of a game maker, the present embodiment of video game is programmed to allow, in the digest mode at a start of the game on the subsequent part only, for the player to select story branches, thereby enjoying, also in the game on the subsequent part only, a story development equivalent in diversity to that in a game experienced on the antecedent part. In other words, although story developments contained in the subsequent part includes those stories which are associated with branch selections in a game of the antecedent part and which would have been unable to be reproduced unless the game on the antecedent part is experienced, the present embodiment of video game in which story branches are selective even in the digest mode allows for all the story developments contained in the subsequent part to be enjoyed.

### Outline of architecture of an embodiment of game application program

Description will now be made of the architecture of a game application program for implementation of the above-described embodiment of video game.

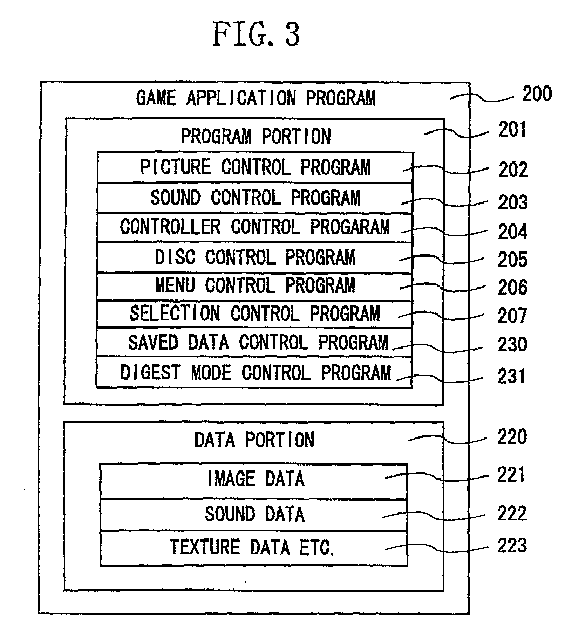

The present embodiment of game application program is adapted to be down-loaded via a communication line, or to be recorded on a recording medium, such as the optical disc 131 such as a DVD-ROM or CD-ROM, and has such a data format as shown in Fig. 3. It is noted that the data format of Fig. 3 conceptually represents a program portion, as well as the remaining data portion, contained in the present embodiment of game application program associated in particular with a subsequent part of a story branching game formed for example with antecedent and subsequent parts, and does not illustrate an actual program architecture.

As shown in Fig. 3, the present embodiment of game application program 200 is roughly dividable into a program portion 201 to be executed by the main CPU 100 of Fig. 2, and a data portion 220 constituted with data on story images and sounds to be reproduced in execution of the present embodiment of video game, and texture and picture effect processing data.

In the data portion 220, image data 221 and sound data 222 are compressed data conforming, for example, to the MPEG (Moving Picture Image Coding Experts Group), which are divided to be prepared, for example, for every scene and for every section between story branching points. Texture data etc. 223 refer to texture data else than the MPEG image data 221 and the sound data 222, factor data for the image data to be thereby multiplied when performing various picture effect processes, and the like.

The program portion 201 includes a picture control program 202 for displaying a game picture on the monitor screen 11, a sound control program 203 for outputting game sounds, a controller control program 204 for controlling those action and input signals of the controller 20 which are peculiar to the present embodiment of video game, a disc control program 205 for controlling reading data from the optical disc 131 in accordance with progress of the present embodiment of video game, a menu control program 206 for controlling display of later-described menu image frames and information of menu select instructions, a selection control program 207 for controlling the story branching, a saved data control program 230 for controlling saved data, and a digest mode control program 231 for controlling operations in he digest mode.

Among respective programs in the program portion 201, the selection control program 207 performs various controls such as a control of reproduction of respective scenes constituting a story, an information control for the branching of story, an information control for branching flags and game points, a control of search information in accordance with search instructions from player, and a time control for the search.

The saved data control program 230 performs such controls as a check for the memory card 26 to be present or absent (whether or not the memory card 26 is inserted in the memory card slot 8), a check for a saved data to be present or absent (whether or not a saved data is stored in the memory card 26), and controls such as of writing and reading of the saved data to the memory card 26, and such communications with the selection control program 207 as transmission and reception of information on game points and branching flags.

The digest control program 231 is adapted for reception of such notices from the saved data control program 230 that the memory card 26 is not inserted in the memory card slot 8 or that the memory card 26 has no saved data stored therein, and to start the digest mode when an instruction for starting a game of the subsequent part is given from the player. The digest control program 231 is further adapted, when an instruction for selection of a story branch is input from the player during reproduction of a story in the digest mode, to cooperate with the selection control program 207 to perform such operations as an increment or decrement of game points equivalent to that in the case of a game experienced on the antecedent part, and a setting of branching flag.

### Flow in execution of the embodiment of game application program

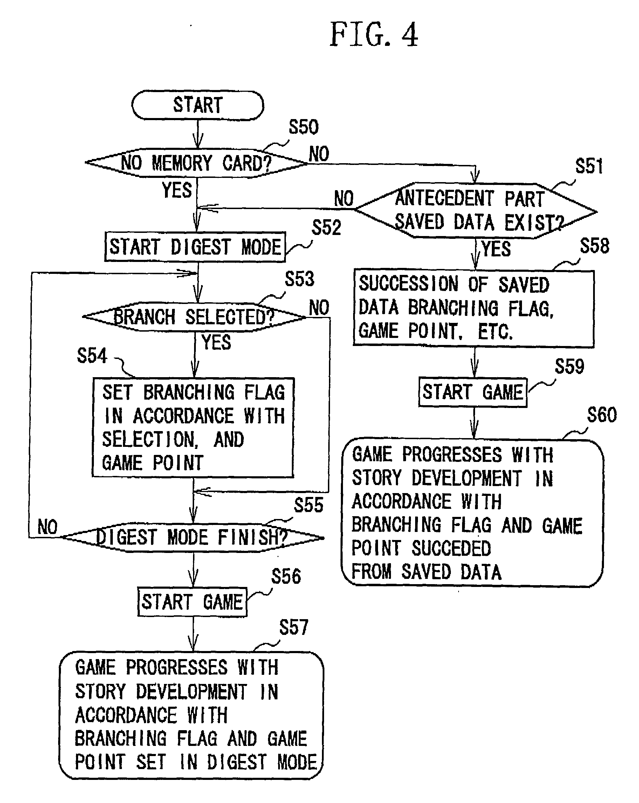

The flow of processing in the above-noted present embodiment of game application program associated with the subsequent part, shown in Fig. 3, is described below with reference to a flowchart shown in Fig. 4. It is noted that the below-described flow is implemented by the respective program parts constituting the present embodiment of game application program, as they are operating on the CPU (central processing unit) incorporated in the entertainment apparatus 2 of Fig.1. The description below is simply made of those operation parts at a game start of the subsequent part which are characteristic to the present invention.

In the present embodiment of game application program 200, as a process at a step S50, the saved data control program 230 makes a decision as to whether the memory card is present or absent, and if it is decided that the memory card is absent (the memory card is not inserted in the memory card slot), the flow goes to a process at a step S52, where the digest control program 231 starts the digest mode.

On the other hand, if it is decided that the memory card is present (the memory card is inserted in the memory card slot), the saved data control program 230 makes, as a process at a step S51, a decision as to whether or not a saved data due to a clearing of a game of the antecedent part is present in the memory card.

At the step S51, if it is decided that a saved data due to a clearing of a game of the antecedent part is present in the memory card, the flow goes to a process at a step S58, where the selection control program 207 receives the saved data of the memory card from the saved data control program 230, taking over such information contained in the saved data as on branching flags and game points due to the clearing of the game of the antecedent part. Thereafter, as a process at a step S59, a game of the subsequent part is started by actions of the program portion 201, and as a process at a step S60, the game progresses with a story development in accordance with the branching flags and game points handed over from the antecedent part.

On the other hand, if the digest mode is started at the step S52, the flow goes to a process at the next step S53. At this step S53, a digest story is subjected to a decision for a story branch selection in accordance with an input of the player's instruction. At the step S53, if the digest story has a story branch selection made in accordance with an input of the player's instruction, the flow goes to a step S54, where the selection control program 207 performs such settings as of branching flag and game point in accordance with the story branch selection. Contrary thereto, if no branch selection is made at the step S53, the flow goes to a step S55.

As the flow has come to the process at the step S56, the digest control program 231 makes a decision as to whether or not the digest mode should be finished by such a matter as that a predetermined digest story has come to an end, or as by an input of the players' instruction for cancellation of the digest mode. Not to finish, the flow again goes to the process at the step S53, or to finish, the flow goes to a process at a step S56.

As the flow has come to the process at the step S55, the program portion 201 operates to start a game of the subsequent part, and as a process at a step S57, the game progresses with a story development in accordance with branching flags and game points generated by story branching selections in the digest mode.

### Concrete example of video game

### Method of starting and operating the game

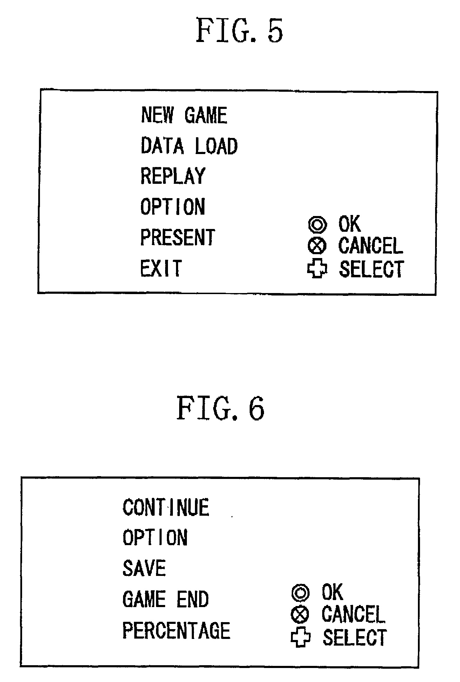

The flow of a concrete video game to be implemented by the above-noted present embodiment of game application program is described below with reference to Fig. 5 to Fig. 11,

First, by turning on a power switch provided at the back side of the present embodiment of entertainment apparatus 2 and further by setting to the disc tray 3 the optical disc 131 on which the present embodiment of game application program is recorded, there is displayed a main title on the screen 11 of the television monitor 10. While the main title is displayed, by pressing the start button 24 of the controller 20 connected for example to the controller port 7A, the present embodiment of video game is started.

Then, if a saved data for the present embodiment of video game is stored in the memory card 26 inserted in the memory card slot 8A (a memory card slot corresponding to the controller port 7A connected to the controller 20), there is displayed a phrase "Continue Yes No" on the monitor screen 11. At this time, if for example the "Yes" side is selected, the player can play a continuation of the last data. On the other hand, if the "No" side is selected, there is displayed a main menu on the monitor screen 11. Also in the case the saved data is not stored in the memory card 26, there is displayed the main menu.

The main menu has such menu items as shown in Fig. 5 for example.

"New Game" is an item for starting a play from a start of a story of the present embodiment of video game. "Data Load" is an item for loading a saved data from the memory card inserted in the memory card slot to start a play from continuation. "Replay" is an item for loading a saved data from the memory card inserted in the memory card slot to perform a replay reproduction up to the time of a last saving. It is noted that a game end is selective from a later-described pause menu to finish the replay reproduction. "Option" is an item for changing various settings on the game. "Present" is an item for appreciation of various favors that appear when a particular condition is met. "Exit" an item for returning to the main menu.

In such a case that a story of the present embodiment of video game is divided for example into an antecedent and a subsequent part as described, the subsequent part for example may have a main menu including a "Continue" item as well. The "Continue" item on the main menu of the subsequent part is for loading a saved data (game points and branching flags) of the antecedent part saved in the memory card inserted in the memory card slot to start a play from a story as a continuation of the antecedent part.

When, as described, the power supply of the present embodiment of entertainment apparatus 2 is turned on and the present embodiment of game application program is loaded, the following functions are allotted to operation parts and buttons of the controller 20. For example, a left second pushdown button has an identical function to the "□" button allotted thereto, and a left first pushdown button of the controller 20 has an identical function to the "○" button allotted thereto. To the "○" button is allotted a function for instruction of a decision, such as on a selected menu item, or paging.

It is noted that, in such a case that a story of the present embodiment of video game is divided for example into a antecedent and a subsequent part, a function for instruction of decision may be allotted to the "○" button in the antecedent part, and functions for paging and instruction of decision may be allotted to the "○" button in the subsequent part. The paging however is enabled simply at a digest of a preamble of a story to be reproduced at a start of the subsequent part for example, and the paging does not function when starting a play after loading a saved data of the antecedent part saved in the memory card by the "Continue" item.

To "Up", "Down", "Left", and "Right" direction keys, a right first pushdown button, and a right second pushdown button are allotted functions for selection of menu items such as of the main menu and a later-described pause menu. To the "□" button is allotted a function for instruction of a history in the past, and to the "Δ" button is allotted a function of starting the search system of story branching point. To the "×" button is allotted a function for instruction of a skip or cancellation, while the right analog operation part is unusable for example. To the start button is allotted a function for instruction to display a pause menu. If the start button is pressed for example during the game or replay reproduction, a later-described pause menu is displayed at a cut of a right subsequent scene.

As another function in the present embodiment of video game, there is a vibration function in a vibration generating mechanism of the controller 20, which can be set to ON and OFF, irrespective of whether the lighting indicator 34 is lit or distinct, by a "Vibration" item provided for example under a later-described "Option" item in the main menu or pause menu.

The pause menu has such menu items as shown in Fig. 6 for example.

"Continue" on the pause menu is an item for returning to the game. "Option" is an item for various settings on the game. "Save" is an item for saving such information as the condition of progress of a game story, branching flags, and game points, and non-selective in replay reproduction. "Game End" is an item for interrupting the game to return to the main title. "Percentage" is an item for displaying a percentage of current achievement of the game. It is noted that, during the game, respective buttons of left first pushdown button / left second pushdown button / right first pushdown button / right second pushdown button / select button / start button can be concurrently pressed for several seconds to effect a software reset for returning to the main title.

When the "Option" item is selected from the main menu or pause menu, an option menu is displayed. This option menu has "Vibration", "Display", "Window", "Wallpaper", "Text & Frame", "Default", and "Manual" items prepared therein. The "Vibration item is an item for setting ON/OFF of operation of the vibration generating mechanism of the controller 20, and the "Display" item is an item to be used when changing a setting of display on the monitor screen. The "Window" item is an item for settings on a window to be displayed on the monitor screen. In the "Window" item, there are prepared a "Wide" item for settings of a so-called wide television, a "Standard" item for settings of a standard television, a "Zoom" item for settings of a zoom image frame, a "Full" item for a setting to display an entirety by the zoom image frame, and a "Free" item for free settings. The "Wallpaper" item is an item for turning a wallpaper setting ON / OFF to effect a switching between an ON setting to display a wallpaper and an OFF setting not to display the wallpaper. The "Text & Frame" item is an item for settings of a text and a text frame, and has prepared therein a "Text & Frame" item for displaying both text and text frame, a "Text" item for displaying the text only, and an "OFF" item for displaying neither. The "Default" item is an item for resetting the screen display to the initial setting. The "Manual" item is an item for displaying on the monitor screen those functions which are allotted to the buttons of the controller 20.

In the "Option" item, if for example the "Display" item is selected and additionally the "Full" item of the "Window" item is selected, there can be made a free setting of window display of the game image frame. Further, by selection of a desirable window to be operated by the "Δ" button and by use of "Up", "Down", "Left", and "Right" direction keys and the left first pushdown button, left second pushdown button, right first pushdown button, and right second pushdown button, respective window conditions can be set. For example, there can be set an window expansion by the left first pushdown button, a window compression by the left second pushdown button, a window deformation by the right first pushdown button or right second pushdown button and the direction keys, and a window position displacement by the direction keys. Moreover, it is possible by pressing the "○" button to establish a setting at the time, and by pressing the "×" button for cancellation of the setting to return to a setting before the change. Further, it is possible by pressing the select button to return to the initial setting, and by pressing the "□" button to have an operational explanation displayed on the monitor screen. After those settings, the "Δ" button can be pressed to finish the setting of the "Option" item, and the "×" button can be pressed to cancel the setting of the "Option" item.

### How to progress the game

Once the present embodiment of video game is started, the game story automatically progresses, having story branching points all provided with limited times. For example, at the story branching points, selective branches are hidden and are not displayed on the monitor screen in some cases, and those displayed thereon in the remaining cases. When selective branches are displayed on the way of story, any branch is selective by the "Up", "Down", "Left", and "Right" direction keys or the right first pushdown button / right second pushdown button, to be decided by the "○" button or the left first pushdown button. Depending on which one of the selective branches is selected, the development of story is influenced. Moreover, in the case a story branching point is hidden and has selective branches not displayed on the monitor screen, if the "Δ" button is pressed down in a timing considered to be optimum by the player, the search system is started for a predetermined period of time. If the story branching point is hit during the operation of the search system, then the flow is allowed to jump to a new branch destination.

In the case the present embodiment of video game is divided for example into an antecedent and a subsequent part, if the "New Game" item of the main menu of the subsequent part is selected or when having started the play by the "Data Load" item, there is indicated a paging mark at a digest of the antecedent part to be reproduced in a preamble of the subsequent part. By pressing the "○" button or the left first pushdown button against the paging mark, the story can be progressed forward.

### Handling game point in the game

The present embodiment of video game is programmed such that the development of story is influenced in dependence on a value of game point. That is, in the present embodiment, when a particular selective branch is selected among displayed selective branches on the monitor screen or if a search for a hidden story branching point is failed, then the bad point is increased, causing the subsequent story branching to go worse. As the value of bad point is increased, there occurs an increased tendency to arrive at a bad end. However, in order to reach the worst conclusion (obtain an achievement of 100% bad level), there is provided also story branching points needing an intentional level rise.

### Saving condition of game progress

In the present embodiment of video game, if the "Save" item is selected on the pause menu to be displayed by pressing the start button in the game or if the game has come to an end, such information as the condition of progress of the story, flag branching points, and game points is saved in the memory card applied to the memory card slot. By loading the saved data, a continuation can be played from a particular part just before the saving. It is noted that, if a data saved after the ending is loaded, the game starts from a start of the story.

### Ending of game

The present embodiment of video game has a variety of endings prepared therein corresponding to combinations of selections of selective branches. At the time of ending, there is displayed an achievement percentage of the video game on the monitor screen. The achievement percentage represents the degree of how many story branching points existing in the story has been passed, in terms of percentage. In the present embodiment of video game, as the start button is pressed in the game and the pause menu is selected, it also is possible by selecting the "Percentage" item to check a current value of the achievement percentage in real time. It is noted that, in order to store the achievement percentage as well as play information at the time of an ending, it is necessary to save the data in the memory card after the ending. In the case a data up to an ending is saved in the memory card, the "×" button can be pressed in the second or later play to thereby skip a part that was passed in the previous game. It however is impossible to skip selective branches or those parts which are first to be passed.

### Concrete flow of video game

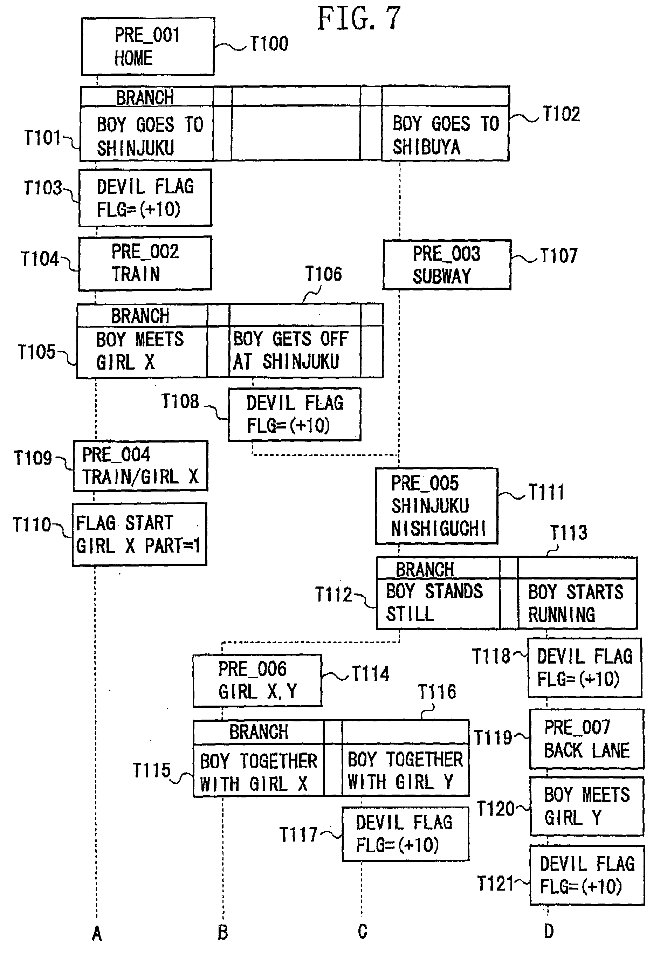

Concrete description will now be made of how the game points (bad point in this embodiment) and branching flags are set in accordance with selections by the player for example in the start of the digest mode of the subsequent part, and how such game points and branching flags influence on the subsequent story development in the start of the game, with reference to Fig. 7 to Fig. 11. It is noted that the video game illustrated below is a game that for example has such story parts as a devil part in which a boy as a leading name becomes a devil, a fight part in which the boy fights with a devil, and a girl X part and a girl Y part showing relationships between the leading name and girls X and Y appearing in the game, and that enters any of such story parts in accordance with branch selections in the digest mode. The digest story is programmed to output a digest as a combination of a moving picture and sounds based on a content that for example an imaginary reporter has examined about the leading name, and display a selection image frame on the screen, when story branches are necessary.

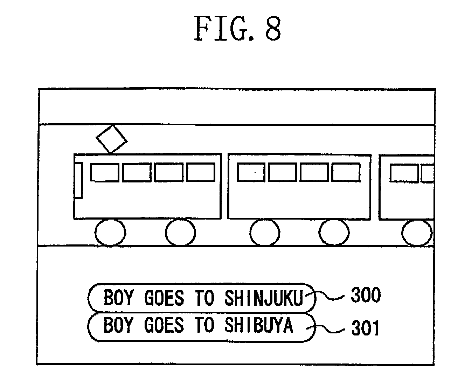

First, as shown in Fig. 7, in a scene no. PRE_001 at T100 in the start of the digest story, there is displayed for example a home of a boy as the leading name, and a picture of the boy going out and taking on a train. Then, as shown in Fig. 8 as an example, as T101 and T102, there appears, together with a picture for example of a train running, a selection image frame displaying selective branches of a selection item 300 for a case in which a destination the boy going to is for example Shinjuku, and of a selection item 301 for a case in which it is for example Shibuya.

If the selection item 301 of "boy goes to Shibuya" is selected at T102 by the player, the flow goes to a scene no. ARE_003 at T107, where for example a picture of a subway is displayed, and further to a scene no. PRE_005 at T111. On the other hand, if the selection item 300 of "boy goes to Shinjuku" is selected at T101 by the player, then a devil flag starts at T103, incrementing bad point by 10, and the flow goes to a scene no. PRE_002 at T104, where for example a picture of inside of a train is displayed. At this time, as T105 and T106, although not shown, there appears a selection image frame displaying selective branches of a selection item for a case in which the boy meets a girl X in the train, and of a selection item for a case in which the boy gets off the train at Shinjuku.

In this selection image frame, if the selection item of "boy gets off train at Shinjuku" is selected at T106 by the player, then a devil flag starts at T108, incrementing bad point by 10, and the flow goes to the scene no. PRE_005 at T111. On the other hand, if the selection item of "boy meets girl X" is selected at T105 by the player, then the flow goes to a scene no. PRE_004 at T109.

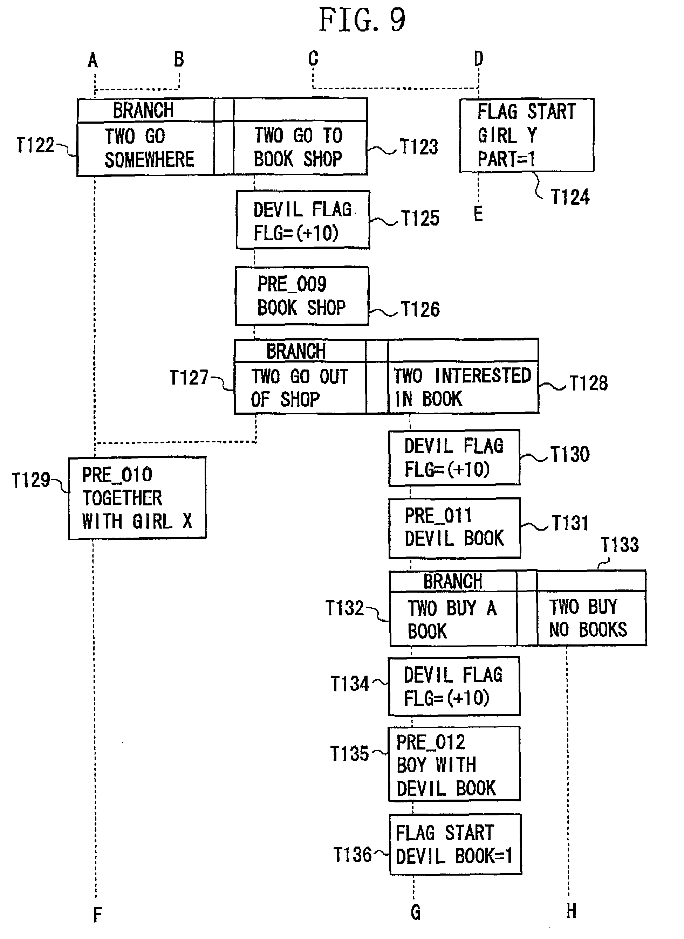

At the scene no. PRE_004, there is displayed for example a picture of the body and girl X together in the train, before "1" is set at T110 to a branching flag for branching into the girl X part. Thereafter, the flow goes to T122 and T123 as shown in Fig.9.

As the flow has come to the scene no. PRE_005 at T111, there is displayed for example a picture of Shinjuku Nishiguchi. Then, as T112 and T113, although not shown, there appears a selection image frame displaying selective branches of a selection item for a case in which the boy stands still, and of a selection item for a case in which the boy starts running.

In this selection image frame, if for example the selection item of "boy stands still" is selected at T112, then the flow goes to a scene no. PRE_006 at T114. On the other hand, if the selection item of "boy starts running" is selected at T113, then a devil flag starts at T118, incrementing bad point by 10, and the flow goes to a scene no. PRE_007 at T119.

In the scene no. PRE_006 at T114, there is displayed a picture of the boy finding girl X and girl Y. Then, as T115 and T116, although not shown, there appears a selection image frame displaying selective branches of a selection item for a case in which the boy goes together with girl X, and of a selection item for a case in which the boy goes together with girl Y.

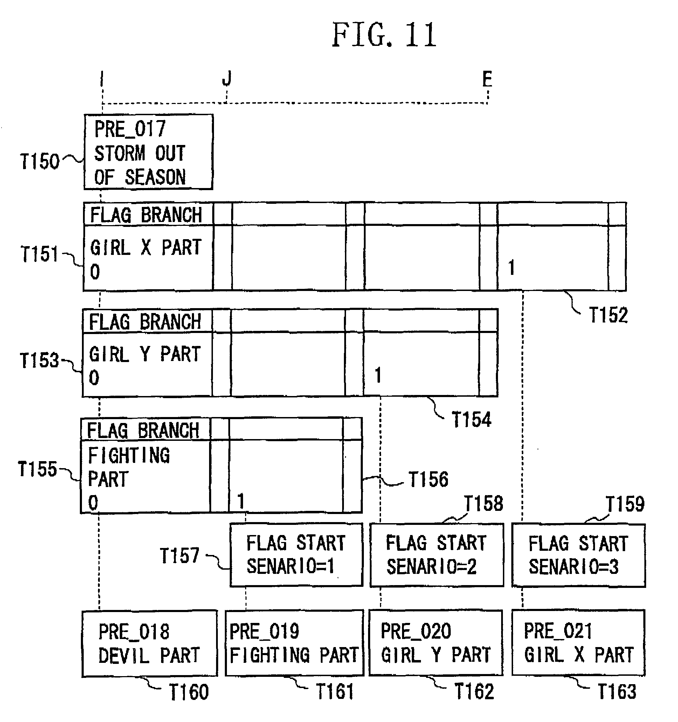

In this selection image frame, if for example the selection item of "boy together with girl X" is selected at T115, then the flow goes to T122 and T123 of Fig. 9. On the other hand, if the selection item of "boy together with girl Y" is selected at T116, then a devil flag starts at T117, incrementing bad point by 10, and the flow goes to T124 of Fig. 9, where "1" is set to a branching flag for branching into the girl Y part when a game of a main part of the subsequent part is started. Thereafter, the flow goes to a scene no. PRE_017 at T150 of Fig. 11.

As the flow has come to the scene no. PRE_007 at T119, the image frame is changed to a picture of a back lane, and further at T120 there is displayed a scene of the boy meeting girl Y, when a devil flag starts at T121, incrementing bad point by 10. Thereafter, the flow goes to T124 of Fig. 9, where "1" is set to a branching flag for branching into the girl Y part.

As the flow has come to T122 and T123 of Fig.9, there appears a selection image frame displaying selective branches of a selection item for a case in which the two go somewhere, and of a selection item for a case in which the two go to a book shop.

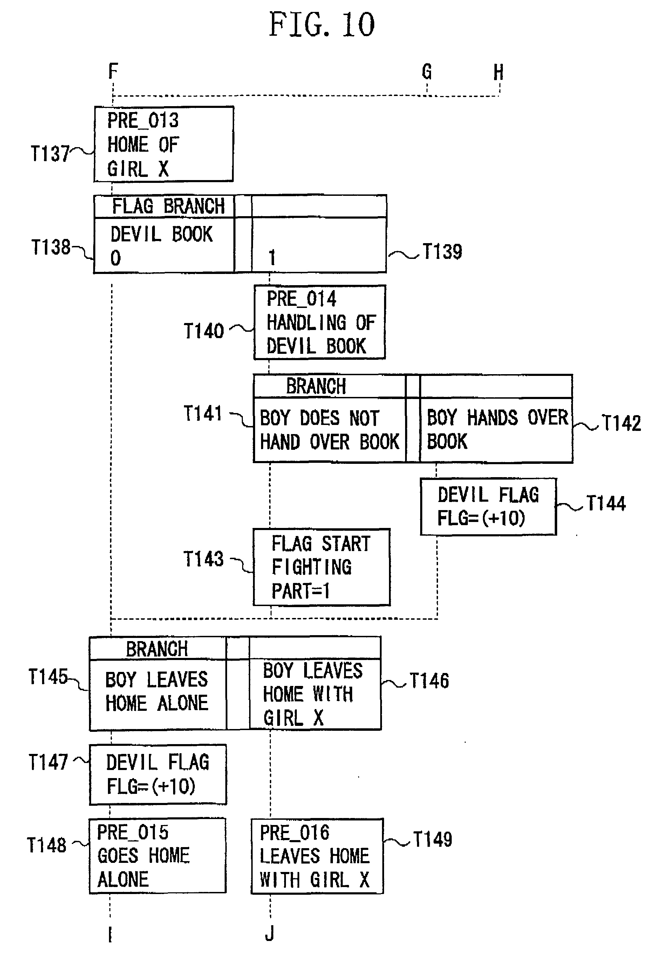

In this selection image frame, if for example the selection item of "two go somewhere" is selected at T122, then the flow goes to a scene no. PRE_010 at T129. At this scene no. PRE_010, there is displayed a scene of the boy walking together with girl X, before the flow goes to a scene no. PRE_013 of Fig. 10. On the other hand, if the selection item of "two go to book shop" is selected at T123, then a devil flag starts at T125, incrementing bad point by 10, and the flow goes to the scene no. PRE_009 at T126.

In the scene no. PRE_009, there is displayed a picture of inside of the book shop. Then, as T127 and T128, there appears a selection image frame displaying selective branches of a selection item for a case in which the two goes out of the book shop, and of a selection item for a case in which the two are interested in a book.

In this selection image frame, if for example the selection item of "two go out of shop" is selected at T127, then the flow goes to the scene no. PRE_010 at T129. On the other hand, if the selection item of "two interested in book" is selected at T128, then a devil flag starts at T130, incrementing bad point by 10, and the flow goes to a scene no. PRE_011 at T131.

In the scene no. PRE_011, there is given for example a zoomed up display of a cover of the book. Then, as T132 and T133, there appears a selection image frame displaying selective branches of a selection item for a case in which the two buy a book, and of a selection item for a case in which the two buy no books.

In this selection image frame, if for example the selection item of "two buy a book" is selected at T132, then a devil flag starts at T134, incrementing bad point by 10, and the flow goes to a scene no. PRE_012 at T135, where a scene is displayed for example of the boy having a devil book he bought, and "1" is set at T136 to a branching flag for a branching in accordance with presence or absence of the devil book, before the flow goes to a scene no. PRE_013 at T137 of Fig. 10. On the other hand, if the selection item of "two buy no books" is selected at T133, then the flow directly goes to the scene no. PRE_013 at T137 of Fig. 10.

In the scene no. PRE_013, there is displayed a scene of a home of girl X. Then, at T138 and T139, there occurs a flag branching corresponding to a value of the branching flag representing the presence or absence of the devil book. If the value of the branching flag is "0" at T138, the flow goes to T145, but on the other hand, if the value of the branching flag is "1", then the flow goes to a scene no. PRE_014 at T140.

In the scene no. PRE_014 at T140, there comes a scene of handling the devil book, and further at T141 and T142, there appears a selection image frame displaying selective branches of a selection item for a case in which the boy does not hand over the devil book to girl X, and of a selection item for a case in which the boy hands over the devil book to girl X.

In this selection image frame, if for example the selection item of "boy does not hand over book" is selected at T141, then "1" is set at T143 to a branching flag for branching into the fight part, before the flow goes to T145 and T146. On the other hand, if the selection item of "boy hands over book" is selected at T142, then a devil flag starts at T144, incrementing bad point by 10, before the flow goes to T145 and T146.

At T145 and T146, there appears a selection image frame displaying selective branches of a selection item for a case in which the boy leaves alone the home of girl X, and of a selection item for a case in which the boy leaves the home together with girl x.

In this selection image frame, if for example the selection item of "boy leaves home alone" is selected at T145, then a devil flag starts at T147, incrementing bad point by 10, and further in the scene no. PRE_015 at T148 there is displayed a scene of the boy leaving alone the home of girl X, before the flow goes to the scene no. PRE_017 at T150 of Fig. 11. On the other hand, if the selection item of "boy leaves home together with girl X" is selected at T146, then in a scene no. PRE_016 at T149 there is displayed a scene of the boy leaving the home together with girl X, before the flow goes to the scene no. PRE_017 at T150 of Fig. 11.

In the scene no. PRE_017 at T150, there is displayed for example a scene of a storm out of season. Then, at T151 and T152, there occurs a flag branching corresponding to a value of the branching flag to the girl X part. If the value of the branching flag is "0" at T151, the flow goes to T153 and T154. On the other hand, if the value of the branching flag is "1", the flow goes to T159, where a flag starts to enter a story of the girl X part, and thereafter the story progresses from a scene no. PRE_021 at T163 to the girl X part of the main part.

At T153 and T154, there occurs a flag branching corresponding to a value of the flag to the girl Y part. If the value of the branching flag is "0" at T153, the flow goes to T155 and T156. On the other hand, if the value of the branching flag is "1", the flow goes to T158, where a flag starts to enter a story of the girl Y part, and thereafter the story progresses from a scene no.PRE_020 at T162 to the girl Y part of the main part.

At T155 and T156, there occurs a flag branching corresponding to a value of the branching flag to the fight part. If the value of the branching flag is "0" at T155, the story progresses from a scene no. PRE_018 at T160 to a story of the devil part of the main part. On the other hand, if the value of the branching flag is "l", the flow goes to T157, where a flag starts to enter a story of the fight part, and thereafter the story progresses from a scene no. PRE_019 at T161 to a story of the fight part of the main part.

As concretely described hitherto, in the present embodiment of video game, it is possible in a digest mode for a player to make a selection of story branch, having the development of story varied in a subsequent part in accordance with the selection, to thereby to provide a diversity to a game starting condition of the subsequent part.

Further, in the present embodiment of video game, information of selections of selective branches disposed in an antecedent part is rendered identical to information of selections of selective branches in a digest that corresponds to the selective branches in the antecedent part. Therefore, the present invention is applicable to a video game divided for example into antecedent and subsequent parts, so that an influence of a story branch selected in a game of the antecedent part can be reflected on the development of story in the subsequent part, and further, even in a case of a game to be started simply within the subsequent part, an influence to selection of a story branch as with the influence in the antecedent part can be reflected on the development of story in the subsequent part.

Description of the foregoing embodiments is for illustrative purposes. The present invention is not limited to the embodiments described, and it is to be understood that changes and variations, such as by designs, may be made without departing from the scope of a technical concept according to the invention. For example, the game point may be, not simply a bad point, but also a good point. Moreover, the present invention is not limited to a video game, but may preferably have other applications, for example, an application to a variety of software using a personal computer, as it is divided in a plurality of parts.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. An information branching control method comprising the steps of:
disposing selective branches in a digest summarizing a content of an antecedent part; and
deciding a start branch destination of a main part as a continued part of the antecedent part in accordance with selection information of the selective branches in the digest.

2. The information branching control method according to claim 1, further comprising the step of rendering selection information of selective branches disposed in the antecedent part and selection information of selective branches in the digest corresponding to the selective branches in the antecedent part identical to each other.

3. The information branching control method according to claim 2, further comprising the step of deciding whether or not an execution of the digest is necessary in accordance with a presence of selection information of the selective branches disposed in the antecedent part.

4. The information branching control method according to claim 1, 2, or 3, further comprising the step of deciding a branch destination in the digest, depending on the selection information of the selective branches in the digest.

5. The information branching control method according to claim 1, 2, 3, or 4, further comprising the step of setting a predetermined variant value to be used when deciding a branch destination in the main part, depending on the selection information of the selective branches in the digest.

6. The information branching control method according to claim 5, further comprising the step of deciding the branch destination in the main part in accordance with the predetermined variant value.

7. The information branching control method according to claim 1, 2, 3, 4, 5, or 6, further comprising the step of setting a predetermined flag in accordance with a selection of a selective branch in the digest.

8. The information branching control method according to claim 7, further comprising the step of deciding a branch destination in the digest in accordance with the predetermined flag.

9. The information branching control method according to claim 7, further comprising the step of deciding a branch destination in the main part in accordance with the predetermined flag.

10. A program executing apparatus for executing an information branching control program, the information branching control program comprising:
a selection instruction input detecting step for detecting a selection instruction input of selective branches disposed in a digest summarizing a content of an antecedent part; and
a branch destination deciding step for deciding a start branch destination of entertainment information of a main part as a continued part of the antecedent part, depending on selection information of the selective branches.

11. The program executing apparatus according to claim 10, wherein the information branching control program is programmed so that selection information of the selective branches disposed in the digest respectively corresponding to selective branches in the information of the antecedent part is identical to selection information of selective branches disposed in the information of the antecedent part.

12. The program executing apparatus according to claim 11, wherein the information branching control program further comprises:
a selection information detecting step for detecting a presence of selection information of the selective branches disposed in the information of the antecedent part; and
a digest execution controlling step for deciding whether or not an execution of the digest is necessary, depending on the presence of selection information.

13. The program executing apparatus according to claim 10, 11, or 12, wherein the branch destination deciding step comprises a step for deciding a branch destination in the digest, depending on selection information of a selective branch in the digest.

14. The program executing apparatus according to claim 10, 11, 12, or 13, wherein the information branching control program further comprises a variant value setting step for setting a predetermined variant value to be used when deciding a branch destination in the main part, depending on selection information of a selective branch in the digest.

15. The program executing apparatus according to claim 14, wherein the branch destination deciding step comprises a step for deciding a branch destination in the digest in accordance with the predetermined variant value.

16. The program executing apparatus according to claim 10, 11, 12, 13, 14, or 15, wherein the information branching control program further comprises a flag setting step for setting a predetermined flag in accordance with a selection of a selective branch in the digest.

17. The program executing apparatus according to claim 16, wherein the branch destination deciding step comprises a step for deciding a branch destination in the digest in accordance with the predetermined flag.

18. The program executing apparatus according to claim 16, wherein the branch destination deciding step comprises a step for deciding the branch destination in the main part in accordance with the predetermined flag.

19. A computer readable recording medium with an information branching control program recorded therein to be executed by a computer, the information branching control program comprising:
a selection instruction input detecting step for detecting a selection instruction input of selective branches disposed in a digest summarizing a content of an antecedent part; and
a branch destination deciding step for deciding a start branch destination in a main part as a continued part of the antecedent part, depending on selection information of the selective branches.

20. The computer readable recording medium with an information branching control program recorded therein according to claim 19, wherein the information branching control program is programmed so that selection information of selective branches disposed in the digest respectively corresponding to selective branches of the antecedent part is identical to selection information of selective branches disposed in the antecedent part.

21. The computer readable recording medium with an information branching control program recorded therein according to claim 20, wherein the information branching control program comprises:
a step for detecting a presence of selection information of the selective branches disposed in the antecedent part; and
a step for deciding whether or not an execution of the digest is necessary, depending on the presence of selection information.

22. The computer readable recording medium with an information branching control program recorded therein according to claim 19, 20, or 21, wherein the branch destination deciding step comprises a step for deciding a branch destination in the digest, depending on selection information of a selective branch in the digest.

23. The computer readable recording medium with an information branching control program recorded therein according to claim 19, 20, 21, or 22, wherein the information branching control program further comprises a step for setting a predetermined variant value to be used when deciding a branch destination in the main part, depending on selection information of a selective branch in the digest.

24. The computer readable recording medium with an information branching control program recorded therein according to claim 23, wherein the branch destination deciding step comprises a step for deciding a branch destination in the digest in accordance with the predetermined variant value.

25. The computer readable recording medium with an information branching control program recorded therein according to claim 19, 20, 21, 22, 23, or 24, wherein the information branching control program further comprises a step for setting a predetermined flag in accordance with a selection of a selective branch in the digest.

26. The computer readable recording medium with an information branching control program recorded therein according to claim 25, wherein the branch destination deciding step comprises a step for deciding a branch destination in the digest in accordance with the predetermined flag.

27. The computer readable recording medium with an information branching control program recorded therein according to claim 25, wherein the branch destination deciding step comprises a step for deciding the branch destination in the main part in accordance with the predetermined flag.

28. An information branching control program to be executed by a computer, comprising:
a selection instruction input detecting step for detecting a selection instruction input of selective branches disposed in a digest summarizing a content of an antecedent part; and
a branch destination deciding step for deciding a start branch destination in a main part as a continued part of the antecedent part, depending on selection information of the selective branches.
